# EUROPÄISCHE PATENTSCHRIFT

(11) **EP 2 216 580 B1**
(45) Veröffentlichungstag und Bekanntmachung des Hinweises auf die Patenterteilung: **19.03.2014**
(21) Anmeldenummer: 10000904.2
(22) Anmeldetag: 29.01.2010
(51) Int. Cl.: F16L 55/179

(54) **Hutprofil zur abdichtenden Verbindung einer Anschlussleitung mit einer Hauptleitung eines Abwasserleitungssystem**
Top profile for sealed connection of a connecting pipeline with a main pipeline of a waste water pipeline system
Profil de chapeau destiné au raccordement étanchéifiant d'une conduite de raccordement avec une conduite principale d'un système de conduite d'eau usée

(30) Priorität: 06.02.2009 DE 202009001537 U
(43) Veröffentlichungstag der Anmeldung: 11.08.2010
(73) Patentinhaber: Rehau AG + Co, 95111 Rehau (DE)
(72) Erfinder: Krause, Frank, 91301 Forchheim (DE)

(56) Entgegenhaltungen:
- EP-A1- 1 798 462
- DE-A1- 19 837 295
- JP-A- 2001 141 172
- US-A- 6 068 725
- US-A1- 2005 133 105
- HABENICHT, GERD: "Kleben", SPRINGER, BERLIN, DE ISBN: 978-3-540-85264-3 pages 83-182,

## Beschreibung

Die Erfindung betrifft ein Hutprofil zur abdichtenden Verbindung einer Anschlussleitung mit einer Hauptleitung eines Abwasserleitungssystems.

Zur Sanierung eines Abwasserleitungssystems wird beispielsweise ein gefaltetes Rohr aus polyolefinem Kunststoff in einen bestehenden Kanal eingegeben und entfaltet, so dass sich das Rohr an die Innenwand des bestehenden Kinals legt, um die neue Hauptleitung des Abwasserleitungssystems zu bilden. Eingeschlossen ist damit ein Mehrschichtrohr und ein vor Ort aushärtendes Rohr aus Schlauchmaterial mit einer polyolefinen Innenschicht.

Es gestaltet sich in der Praxis schwierig, eine abdichtende Verbindung einer Anschluss leitung mit einer Hauptleitung über ein Hutprofil herbeizuführen, Herkömmliche Hutprofile werden mit der Hauptleitung verschweißt. Die Schweißarbeiten erfordern in der Praxis einen erheblichen Zeitaufwand. Sind teuer, oft mit dem Ergebnis mangelnder Dichtigkeit.

Aus der EP 1 798 462 A1 ist ein Verfahren zur Sanierung von undichten Wänden an Abzeigleitungen von Kanalrohren bekannt, bei dem ein mit einem härtbaren Harz getränkter Faserschlauch an die Innenwand der Leitung angepresst wird.

Die DE 198 37 295 A1 lehrt, zur Rohrabdichtung des Verbindungsbereichs zwischen einem Zulaufrohr und einem Hauptrohr ein mit aushärtbarem Kunstharz getränktes Auskleideformteil einzusetzen, bei dem verschiedene Abschnitte mit dauerelastisch bzw. starr aushärtenden Kunstharzen getränkt sind, damit beim Auftreten von Scherkräften das Auskleideformteil nicht zerreißt.

Die US 6 068 725 offenbart ein Verfahren, die Verbindung zwischen einer Hauptleitung und einer Zulaufleitung mit einem Hutprofil abzudichten, das einen Hutstutzen und eine Hutkrempe aufweist, wobei das Hutprofil mit einem härtbaren Harz imprägniert ist.

Aus der US 2005/0133105A1 geht eine Vorrichtung hervor, mit der ein Seitenzulaufrohr eines Hauptrohres eines Abwassersystems mit einem Reparaturelement in Form eines Hutprofils, das mit einem thermisch aushärtenden Harz imprägniert ist, reparierbar ist.

Die JP 2001 141172 A offenbart ein Hutprofil zur abdichtenden Verbindung einer Anschlussleitung mit einer aus einem Polyethylenrohr gebildeten Hauptleitung, wobei die Hauptleitung zur Sanierung eines Abwasserleitungssystems in eine Abwasserleitung einbringbar ist, wobei das Hutprofil einen Abschnitt aus einem auf Polyethylen aufschmelzbaren material aufweist.

Der Erfindung liegt die Aufgabe zugrunde, ein Hutprofil zur abdichtenden Verbindung einer Anschlussleitung mit einer Polyethylen-Hauptleitung eines Abwasserleitungssystems bereitzustellen, welches den Vorgang des Anschließens der Anschlussleitung an die Hauptleitung wesentlich vereinfacht und verkürzt.

Um die der Erfindung zugrunde liegende Aufgabe zu lösen, wird das Hutprofil nach Anspruch 1 bereitgestellt.

Dadurch kann die Anbindung des Hutprofils an ein Polyethylenrohr wesentlich vereinfacht werden.
Es kann sich als hilfreich erweisen, wenn die Hutkrempe als Klebeabschnitt ausgebildet ist. Damit ist eine einfache und dichte Anbindung herstellbar.

Aus Kostengründen erweist es sich als praktisch, wenn der Klebeabschnitt als Klebeschicht ausgebildet ist. Nur geringe Schichtstärken sind in der Regel ausreichend, um die gewünschte Klebewirkung zu erzielen.

Gemäß der Erfindung ist der klebeabschnitt als Beschichtung auf die Außenseite des Hutprofils, vorzugsweise auf die dem Polyethylenrohr zugewandten Außenseite der Hutkrempe, aufgebracht. Dadurch kann das Hutprofil noch kostengünstiger hergestellt werden, weil die Beschichtung in minimaler Dicke aufgetragen werden kann.

Es kann sich als nützlich erweisen, wenn das Material des Klebeabschnitts thermisch aktivierbar ist. So kann das Hutprofil in einem nicht aktivierten Zustand des Materials in die bestimmungsgemäße Position gebracht werder so dass auch eine Fehlpositionierung des Hutprofils korrigiert werden kann.

Es kann hilfreich sein, wenn der Klebeabschnitt einen auf Polyethylen klebefähigen bzw. abgestimmten Haftvermittler enthält. Haftvermittler sind wie Klebstoffe chemisch reaktive Substanzen, durch die eine Erhöhung der Anzahl der reaktiven Gruppen und ein Konservieren von hochenergetischen Oberftächenzuständen erreicht wird.

Es kann aber auch vorteilhaft sein, wenn der Klebeabschnitt einen auf Polyethylen klebefähigen Schmelzklebstoff enthält. Dadurch kann das Hutprofil in einem festen Zustand des Schmelzklebstoffs In die bestimmungsgemäße Position gebracht werden. Vorzugsweise wird der Schmelzklebstoff erst anschließend aufgeschmolzen, um das Hutprofil in der bestimmungsgemäßen Position zu fixieren. Dadurch kann die Gefahr einer Fehlpositionierung des Hutprofils verringert werden.

Es kann hilfreich sein, wenn der Klebeabschnitt aus klebefähigem Material besteht, das chemisch mit Carbonsäureestern modifiziert ist.
gemäß der Erfindung enthält der Klebeabschnitt Ethylenvinylacetat (EVA). Ethylenvinylacetat zeichnet sich durch gute Klebeeigenschaften auf Polyethylen aus.

Bevorzugt wird ein Ethylenvinylacetat eingesetzt mit einem Vinylacetatanteil von maximal 70 Gew.-%, vorzugsweise von 20 Gew.-% bis 45 Gew.-%, bevorzugt 38 Gew.-% bis 42 Gew.-%. Ein derartiger Klebeabschnitt weist besonders gute Klebeeigenschaften auf Polyethylen auf.

Es kann von Vorteil sein, wenn der Klebeabschnitt aus klebefähigem Material besteht, das aus einem Ethylenacrylsäure-Copolymer oder Ethylenacrylsäureester-Copolymer oder Ethylenmethacrylsäure-Copolymer oder Ethylenmethacrylsäureester-Copolymer oder Mischungen daraus oder Abmischungen daraus mit Polyethylen gebildet sein kann, was Vorteile in der Haftfestigkeit und Verarbeitbarkeit mit sich bringt.

Es kann von Vorteil sein, dass der Klebeabschnitt aus klebefähigem Material besteht, das chemisch modifiziert ist, vorzugsweise durch Beaufschlagung mit Maleinsäureanhydrid. Dadurch kann die Festigkeit des klebefähigen Materials bei der Streckgrenze erhöht werden.

Es kann von Vorteil sein, wenn der Klebeabschnitt aus klebefähigem Material besteht, das aus einem funktionalisierten thermoplastischen Elastomeren oder einem Blend mit PVC (Polyvinylchlorid) oder PA (Polyamid) besteht. Als funktionalisierte thermoplastische Elastomere eignen sich in diesem Zusammenhang styrolhaltige Systeme, wie Styrol-Ethylen-Butadien-Styrol-Copolymere (SEBS).

Es kann praktisch sein, wenn die Klebeschicht eine Wanddicke von weniger als 5,0 mm, vorzugsweise von 0,1 bis 2,0 mm, bevorzugt 0,3 bis 0,7 mm aufweist. Da das auf Kunststoff klebefähige Material in der Regel teuer ist, schlägt sich der Einsatz dieses Material verstärkt in den Herstellungskosten nieder. Die Materialstärke des Klebeabschnitts ist vorzugsweise derart bemessen, dass die gewünschte Klebefestigkeit erreicht wird.

Es kann von Vorteil sein, wenn der Klebeabschnitt aus klebefähigem Material besteht, das zusätzlich wenigstens ein polares Material, wie bspw. einen siliziumhaltige Stoff oder Talkum, enthält, das zu einer Erhöhung der Klebneigung des klebefähigen Materials beitragen.

Eine bevorzugte Ausführung der Erfindung betrifft die Anbindung der Anschlussleitung an die Hauptrohrleitung durch einen Klebeabschnitt mit oder aus einem auf Kunststoff klebefähigen Material, dass eine Abreißfestigkeit einer Klebeverbindung an der Rohrinnenseite unter Verwendung eines Epoxid-/Polyester-/Acrylat- oder Polyurethanklebstoffs mindestens 1 N/mm² beträgt. Diese Maßnahme hat den Vorteil, dass die Klebeverbindung die Anforderungen für ausreichend zugfeste Anbindungen und Dichtheit (über-)erfüllt.

Für die Handhabung des Hutprofils beim Anschluss der Anschlussleitung an die Hauptleitung kann es hilfreich sein, wenn das Hutprofil flexibel ist.

Zur Anbindung des Hutprofils an Beton oder Steinzeug kann es von Vorteil sein, wenn das Hutprofil eine mit Harz getränkte Textilstruktur aufweist.

Die bevorzugte Ausführung der Erfindung wird nachstehend mit Bezug auf die beigefügte Zeichnung beschrieben.

### Kurze Beschreibung der Zeichnungen

Es zeigen:

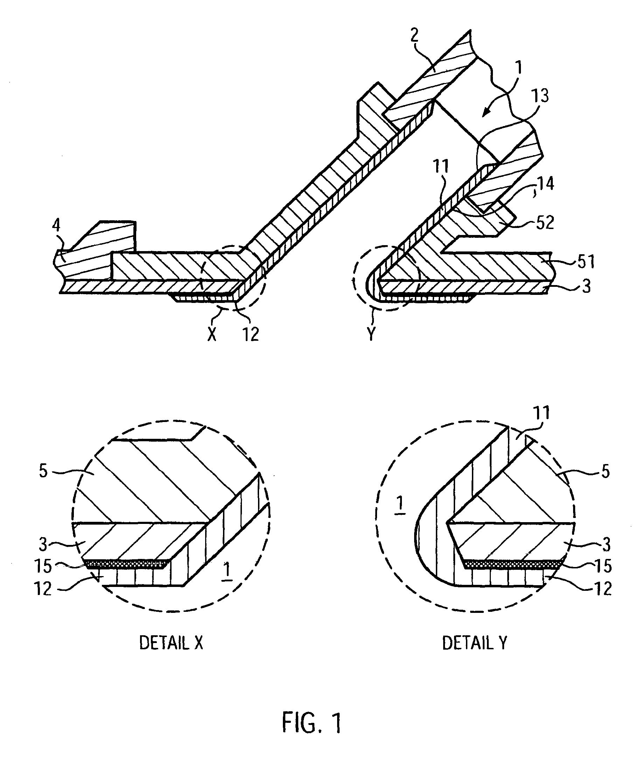

- Figur 1: eine Querschnittsansicht des erfindungsgemäßen Hutprofils in einem abgedich- teten Verbindungzustand zwischen einer Anschlussleitung und einer Hauptleitung eines Abwasserleitungssystems, wobei das Hutprofil und die Hauptleitung über ei- nen Klebeabschnitt mit oder aus einem auf Kunststoff klebefähigen Material ver- klebt sind.

### Detaillierte Beschreibung des bevorzugten Ausführungsbeispiels

Figur 1 zeigt eine Querschnittsansicht des erfindungsgemäßen Hutprofils 1 in einem abgedichteten Verbindungszustand zwischen einer Anschlussleitung 2 und einer Hauptleitung 3 eines Abwasserleitungssystems. Das Hutprofil 1 und die Hauptleitung 3 sind an einem Klebeabschnitt 15 mit oder aus einem auf Kunststoff klebefähigen Material verklebt. Die Verbindungsstellen zwischen dem Hutprofil 1 und der Hauptleitung 3 sind anschaulich in den Detailansichten X und Y dargestellt.

Die Hauptleitung 3 ist im vorliegenden Fall ein Kunststoffrohr aus Polyethylen zur Sanierung von Abwasserleitungen, wobei das Rohr 3 querschnittsreduzierend verformbar ist, um in die zu sanierende Abwasserleitung 4, 5 eingebracht zu werden, und anschließend rückverformbar ist, um von innen gegen die Abwasserleitung 4, 5 gelegt zu werden. In dem in Figur 1 dargestellten Zustand ist das Rohr 3 bereits rückverformt und von innen gegen die Abwasserleitung 4, 5 gelegt.

Die zu sanierende Abwasserleitung 4, 5 umfasst einen unverzweigten Rohrabschnitt 4 und einen verzweigten Rohrabschnitt 5. Der verzweigte Rohrabschnitt 5 umfasst ein Anschlussstück 51 für den unverzweigten Rohrabschnitt 4 sowie ein Anschlussstück 52 für die Anschlussleitung 2.

Das Hutprofil 1 umfasst einen Hutstutzen 11 und eine Hutkrempe 12. Dabei ist das Hutprofil 1 flexibel und weist eine mit Harz getränkte Textilstruktur auf. Eine Innenseite 13 des Hutprofils 1 bildet einen kontinuierlichen und durchströmbaren Leitungsabschnitt. Eine Außenseite 14 des Hutprofils 1 ist zur abdichtenden Verbindung der Anschlussleitung 2 mit der Hauptleitung 3 von innen an der Anschlussleitung 2, der Hauptleitung 3 und der zu sanierenden Abwasserleitung 5 anlegbar. In dem in Figur 1 dargestellten Zustand befindet sich das Hutprofil 1 in Anlage an der Anschlussleitung 2, der Hauptleitung 3 und der zu sanierenden Abwasserleitung 5.

Im vorliegenden Fall ist der Klebeabschnitt 15 als eine an der Außenseite 14 der Hutkrempe 12 aufgebrachte Beschichtung ausgebildet. Die Beschichtung 15 enthält Ethylenvinylacetat mit einem Vinylacetatanteil von 40 Gew.-%, und weist eine Stärke von weniger als 0,5 mm auf. Das Material der Beschichtung 15 ist thermisch aktivierbar.

Die bevorzugte Anwendung des erfindungsgemäßen Hutprofils 1 wird nachstehend mit Bezug auf die beigefügte Zeichnung beschrieben.

Zur Sanierung einer defekten Abwasserleitung 4, 5 wird ein werkseitig gefaltetes PE-Rohr 3 eingezogen und vor Ort rückgeformt. Verzweigte Leitungsabschnitte 5 aus Beton oder Steinzeug werden durch das Rohr 3 bei der Rückformung verdeckt, so dass das Rohr nach der Rückformung an den verzweigten Leitungsabschnitten 5 geöffnet und abgedichtet werden muss. Dazu wird ein erster Roboter in das Rohr 3 eingefahren, um das Rohr 3 an der gewünschten Abzweigstelle aufzufräsen. Der geöffnete Rohrabschnitt wird anschließend von Spänen und gegebenenfalls eintretendem Wasser gereinigt.

Auf einem zweiten Roboter wird das Hutprofil 1 bzw. die Hutmanschette eingefahren und über aufblasbare Hilfseinrichtungen in die bestimmungsgemäße Position gebracht. Durch eine UV-Lampe wird die Beschichtung 15 mit Energie beaufschlagt und erwärmt sich in Folge der Energiebeaufschlagung. Durch eine ca. 30 Minuten andauernde Wärmeeinwirkung wird das thermisch aktivierbare Material der Beschichtung 15 derart aktiviert, dass eine dauerfeste Verbindung zu dem PE-Rohr 3 herbeigeführt werden kann. Über eine weitere Behelfseinrichtung wird die Hutkrempe gegen die Innenseite des PE-Rohrs 3 gedrückt, bis an der Verbindungsstelle die gewünschte Festigkeit erreicht ist. Das Hutprofil 1 ist derart konfektioniert, dass keine Nachbehandlung erforderlich ist. Die Anbindung des Hutprofils 1 an den verzweigten Rohrabschnitt 5, das Anschlussstück 52 und die Anschlussleitung 2, welche aus Beton oder Steinzeug gefertigt sind, erfolgt dabei in an sich bekannter Art und Weise durch Andrücken und Aushärten des Harzes, mit welchem die Textilstruktur des Hutprofils 1 getränkt ist.

Nach der Herstellung der abgedichteten Verbindung zwischen der Anschlussleitung 3 und der Hauptleitung 2 durch das erfindungsgemäße Hutprofil 1, wird die Verbindungsstelle einer Dichtigkeitsprüfung unterzogen, wobei ein Hochdruckreinigungstest, ein Haftzugfestigkeitstest sowie ein Abreißtest durchgeführt werden.

Im Ergebnis wird die Beschichtung 15 an der Außenseite 14 der Hutkrempe 12 unter Wirkung eines Anpressdrucks mit der Innenseite der Hauptleitung 3 verklebt. In Vorbereitung sind nur die zu verbindenden Flächen der Beschichtung 15 und der Innenseite der Hauptleitung 3 zu reinigen, müssen aber nicht intensiv aufgeraut werden. Erfolgt eine Energiebeaufschlagung zur thermischen Aktivierung des beschichteten Materials, wird eine Verklebung und Abdichtung der zu verklebenden Flächen durch die Beschichtung 15 bei Temperaturen ab + 70 °C erreicht.

Die Verklebung und Abdichtung erfolgt über die gesamte beschichtete Fläche bzw. Hutkrempe 12. Die Verklebung erreicht zur Vermeidung von Ablösung der Hutkrempe 12 von der Hauptleitung 3 Haftzugfestigkeiten im Abreißtest von mindestens 1 N/mm². Die Verklebung behält ihre Klebefestigkeit auf Dauer bei, da sich die Eigenschaften der Hauptleitung 3, des Hutprofils 1, insbesondere der Hutkrempe 12 und der Beschichtung 15 nicht wesentlich ändern.

## Patentansprüche

1. Hutprofil (1) zur abdichtenden Verbindung einer Anschlussleitung (2) mit einer aus einem Polyethylenrohr gebildeten Hauptleitung (3), wobei die Hauptleitung (3) zur Sanierung eines Abwasserleitungssystems in eine Abwasserleitung (4, 5) einbringbar ist, wobei das Hutprofil (1) einen Klebeabschnitt (15) mit einem auf Polyethylen klebefähigen Material aufweist, das Ethylenvinylacetat ist, und wobei der Klebeabschnitt (15) als Beschichtung auf die Außenseite (14) des Hutprofils (1) aufgebracht ist.

2. Hutprofil (1) nach Anspruch 1. **dadurch gekennzeichnet, dass** das Hutprofil (1) einen Hutstutzen (11) und eine Hutkrempe (12) aufweist, wobei der Klebeabschnitt (15) als Beschichtung auf die dem Polyethylenrohr zugewandte Außenseite (14) der Hutkrempe (12) aufbracht ist.

3. Hutprofil (1) nach einem der vorangegangenen Ansprüche, **dadurch gekennzeichnet, dass** der Klebeabschnitt (15) einen auf Polyethylen klebefähigen Haftvermittler enthält.

4. Hutprofil (1) nach einem der vorangegangenen Ansprüche, **dadurch gekennzeichnet, dass** der Klebeabschnitt (15) einen auf Polyethylen klebefähigen Schmelzklebstoff enthält.

5. Hutprofil (1) nach Anspruch 4, **dadurch gekennzeichnet, dass** der Schmelzklebstoff nach der Positionierung des Hutprofils in der bestimmungsgemäßen Position aufschmelzbar ist.

6. Hutprofil (1) nach einem der vorangegangenen Ansprüche, **dadurch gekennzeichnet, dass** der Klebeabschnitt (15) Ethylenvinylacetat mit einem Vinylacetatanteil von maximal 70 Gew.%, vorzugsweise von 20 bis 45 Ges.-%. bevorzugt 38 Gew.% bis 40 Gew.-% enthält.

7. Hutprofil (1) nach einem der vorangegangenen Ansprüche, **dadurch gekennzeichnet, dass** der Klebeabschnitt (15) chemisch mit Carbonsäureestern modifiziert ist.

8. Hutprofil (1) nach einem der vorangegangenen Ansprüche, **dadurch gekennzeichnet, dass** der Klebeabschnitt (15) aus einem klebefähigen Material besteht, das mit Maleinsäureanhydrid modifiziert ist.

## Claims

1. Hat profile (1) for the sealing connection of a connecting pipeline (2) to a main pipeline (3) formed of a polyethylene pipe, the main pipeline (3) being capable of being introduced into a waste-water pipeline (4, 5) in order to renovate a waste-water pipeline system, the hat profile (1) having a bonding portion (15) with a material that is adhesive on polyethylene, which is ethylene vinyl acetate, and the bonding portion (15) being applied as a coating to the outer side (14) of the hat profile (1).

2. Hat profile (1) according to Claim 1, **characterized in that** the hat profile (1) has a hat connecting-piece (11) and a hat brim (12), the bonding portion (15) being applied as a coating to the outer side (14) of the hat brim (12) that is facing the polyethylene pipe.

3. Hat profile (1) according to one of the preceding claims, **characterized in that** the bonding portion (15) includes an adhesion promoter that is adhesive on polyethylene.

4. Hat profile (1) according to one of the preceding claims, **characterized in that** the bonding portion (15) includes a hot-melt adhesive that is adhesive on polyethylene.

5. Hat profile (1) according to Claim 4, **characterized in that** the hot-melt adhesive is meltable after the hat profile has been positioned in the designated position.

6. Hat profile (1) according to one of the preceding claims, **characterized in that** the bonding portion (15) includes ethylene vinyl acetate with a vinyl acetate content of at most 70% by weight, preferably of 20 to 45% by weight, with preference 38% by weight to 40% by weight.

7. Hat profile (1) according to one of the preceding claims, **characterized in that** the bonding portion (15) is chemically modified by carboxylic acid esters.

8. Hat profile (1) according to one of the preceding claims, **characterized in that** the bonding portion (15) consists of an adhesive material that is modified by maleic anhydride.

## Revendications

1. Profil de chapeau (1) destiné au raccordement étanche d'une conduite de raccordement (2) avec une conduite principale (3) formée par un tube de polyéthylène, dans lequel la conduite principale (3) peut être introduite dans une conduite d'eaux usées (4, 5) pour l'assainissement d'un système de conduite d'eaux usées, dans lequel le profil de chapeau (1) présente une partie adhésive (15) avec un matériau pouvant coller sur le polyéthylène, qui est l'éthylène-acétate de vinyle, et dans lequel la partie adhésive (15) est déposée sous la forme d'un revêtement sur le côté extérieur (14) du profil de chapeau (1).

2. Profil de chapeau (1) selon la revendication 1, **caractérisé en ce que** le profil de chapeau (1) présente une buse de chapeau (11) et un rebord de chapeau (12), dans lequel la partie adhésive (15) est déposée sous la forme d'un revêtement sur le côté extérieur (14), tourné vers le tube de polyéthylène, du rebord de chapeau (12).

3. Profil de chapeau (1) selon l'une quelconque des revendications précédentes, **caractérisé en ce que** la partie adhésive (15) contient un agent adhésif pouvant coller sur le polyéthylène.

4. Profil de chapeau (1) selon l'une quelconque des revendications précédentes, **caractérisé en ce que** la partie adhésive (15) contient une colle fusible pouvant coller sur le polyéthylène.

5. Profil de chapeau (1) selon la revendication 4, **caractérisé en ce que** la colle fusible peut être fondue après la mise en place du profil de chapeau dans la position convenable.

6. Profil de chapeau (1) selon l'une quelconque des revendications précédentes, **caractérisé en ce que** la partie adhésive (15) contient de l'éthylène-acétate de vinyle avec une proportion d'acétate de vinyle de 70 % en poids au maximum, de préférence de 20 à 45 % en poids, et de préférence encore de 38 % en poids à 40 % en poids.

7. Profil de chapeau (1) selon l'une quelconque des revendications précédentes, **caractérisé en ce que** la partie adhésive (15) est modifiée chimiquement avec des esters d'acides carboxyliques.

8. Profil de chapeau (1) selon l'une quelconque des revendications précédentes, **caractérisé en ce que** la partie adhésive (15) se compose d'un matériau adhésif, qui est modifié avec un anhydride de l'acide maléique.
